Europäisches Patentamt

European Patent Office

Office européen des brevets

(19)

(11) Veröffentlichungsnummer : **0 223 146**
**B1**

(12)

# EUROPÄISCHE PATENTSCHRIFT

(45) Veröffentlichungstag der Patentschrift :
**19.07.89**

(51) Int. Cl.⁴ : **C 10 M173/00, B 60 C 25/00**

(21) Anmeldenummer : **86115235.3**

(22) Anmeldetag : **04.11.86**

(54) **Montagepaste für Fahrzeugluftreifen.**

(30) Priorität : 16.11.85 DE 3540667

(43) Veröffentlichungstag der Anmeldung :
**27.05.87 Patentblatt 87/22**

(45) Bekanntmachung des Hinweises auf die Patenterteilung : **19.07.89 Patentblatt 89/29**

(84) Benannte Vertragsstaaten :
**AT BE CH DE FR GB IT LI LU NL SE**

(56) Entgegenhaltungen :
**DE--A-- 2 609 666**
**FR--A-- 2 340 832**
**FR--A-- 2 397 453**
**GB--A-- 1 102 030**
**US--A-- 3 931 843**

(73) Patentinhaber : **Continental Aktiengesellschaft**
**Königsworther Platz 1**
**D-3000 Hannover 1 (DE)**

(72) Erfinder : **Umland, Henning, Dr.**
**Barwegskoppel 16**
**D-2090 Winsen (Luhe) (DE)**
Erfinder : **Fricke, Gerhard**
**Bärenriegelweg 6**
**D-8491 Lohberg (DE)**

EP 0 223 146 B1

## Beschreibung

Die Erfindung betrifft eine Paste, insbesondere eine Montagepaste für Fahrzeugreifen, die im Zeitpunkt der Verarbeitung überwiegend Wasser enthält.

Aus der FR-A-2 397 453 ist ein Schmiermittel für platte Reifen bekannt, bei dem auf 100 Teile eines Wasser-Äthylenglkol-Gemisches 0,05 bis 2 Teile eines Polyäthylenoxids, 0,15 bis 2 Teile eines Polysaccharids und 8 Teile Cellulosefasern kommen.

Bei der Montage von Fahrzeugluftreifen ergibt sich häufig die Schwierigkeit, daß die Reifenwülste nur unter Aufwendung sehr hoher Kräfte über die Felgenhörner einer Fahrzeugfelge gehoben werden können. Um die Wülste vor Beschädigungen während der Montage zu schützen, streicht man die gefährdeten Wulstpartien mit einer reibungsvermindernden Paste ein.

Bei der Anwendung einer bekannten Montagepaste, die etwa zur Hälfte aus Wasser besteht und einen hohen Glyzerinanteil aufweist, wird zwar die Reibung während der Montage verringert, doch wird es als Nachteil empfunden, daß die erhöhte Gleitwirkung dauerhaft erhalten bleibt. Somit besteht die Gefahr, daß der Reifen auf der Felge durchrutschen kann.

Der Erfindung liegt deshalb die Aufgabe zugrunde, eine Montagepaste anzugeben, die im Zeitpunkt der Reifenmontage eine hohe Schmierwirkung aufweist, bei der diese Schmierwirkung jedoch anschließend stark abnimmt.

Eine Paste, die diese Aufgabe löst, ist erfindungsgemäß dadurch gekennzeichnet, daß sie 93 % bis 98,3 % Wasser, 3,0 % bis 0,5 % eines wasserlöslichen Konsistenzgebers in Form eines Cellulosederivats, 1,5 % bis 0,5 % eines Netzmittels in Form eines nichtionischen Tensids, insbesondere von Fettalkohol-Polyglykoläther, und weiterhin 2,5 % bis 0,7 % eines oder mehrerer konservierungs, und/oder Rostschutzmittel enthält.

Die erfindungsgemäße Paste bietet aufgrund des extrem hohen Wasseranteils und des nicht vorhandenen Glyzerins den Vorteil, daß nach beendigter Reifenmontage und nach der Verdunstung des Wassers nur minimale Rückstände hinterlassen werden, die keine nennenswerte geringen Herstellungskosten.

Als techniste Vorteils sind das gute Benetzungsverhalten gegenüber Gummi und die große Schmierwirkung auch bei hoher Belastung (Montage von Großeifen) zu nennen. Schließlich ist zu erwähnen, daß die erfindungsgemäße Paste kein Nitrit enthält (Forderung des Umweltschutzes), daß sie keine Korrosion des Felgenmaterials bewirkt und daß kein Schimmelbefall bei längerer Lagerung gegeben ist.

Die erfindungsgemäße Paste besteht im wesentlichen aus 93 %-98,3 % Wasser, wobei 96 % bevorzugt werden. Als übrige Bestandteile der Paste sind 3 % - 0,5 %, bevorzugt 1,5 % des wasserlöslichen Konsistenzgebers, 1,5 % - 0,5 % bevorzugt 1 % eines oder mehrerer Rostschutzmittel zu nennen, die darüber hinaus eine Konservierungswirkung aufweisen können. Es sollte angemerkt werden, daß alle Prozentangaben im Rahmen dieser Anmeldung Gewischtsanteile bezeichnen.

Als wasserlöslicher Konsistenzgeber, mit dem der Grad der gewünschten Dickflüssigkeit der Paste eingestellt wird, ist ein Cellulosederivat bestens geeignet. Als Netzmittel kommt vor allem Fettalkohol-Polyglykoläther in Frage, doch können gegebenenfalls auch andere nichtionische Tenside eingesetzt werden.

Als Konservierungs- und Rostschutzmittel sind Benzoate geeignet, besonders günstig ist Natriumbenzoat, und zwar in einer Menge von 1,5 % - 0,5 %, bevorzugt 1 %. Besonders gute Ergebnisse werden erzielt, wenn man das Natriumbenzoat mit dem weiteren Roschutzmittel Natriumcarbonat kombiniert, das in einem Mengenanteil von 1,0 % - 0,2 %, bevorzugt 0,5 %, zum Einsatz kommt. Bei Bedarf kann das Natriumkarbonat durch Borax, Trinatriumphosphat oder Alkaliseifen ersetzt werden.

In einer nachfolgenden Tabelle werden die Bestandteile der Paste nochmals in den vorgeschlagenen Mengenbereichen und als bevorzugter Mengenanteil zusammengefaßt.

Tabelle

| | bevorz. Menge | |
|---|---|---|
| 93,0 % - 98,3 % | 96 % | Wasser |
| 3,0 % - 0,5 % | 1,5 % | wasserlösliches Cellulosederivat (Konsistenzgeber) |
| 1,5 % - 0,5 % | 1 % | Fettalkohol-Polyglykoläther (Netzmittel) |
| 1,5 % - 0,5 % | 1 % | Natriumbenzoat (Konservierungs- und Rostschutzmittel) |
| 1,0 % - 0,2 % | 0,5 % | Natriumcarbonat (Rostschutzmittel) |

## EP 0 223 146 B1

Wenn die erfindungsgemäße Paste auch primär als Montagepaste für Fahrzeugreifen jeder Art Konzipiert ist, so läßt sie sich doch auf anderen Gebieten einsetzen, wo es auf eine hohe Schmierwirkung zur Reibungsverminderung zwischen Gummi und Metall ankommt.

### Patentansprüche

1. Paste, insbesondere Montagepaste für Fahrzeugreifen, die im Zeitpunkt der Verarbeitung überwiegend Wasser enthält, dadurch gekennzeichnet, daß sie 93 % bis 98,3 % Wasser, 3,0 % bis 0,5 % eines wasserlöslichen Konsistenzgebers in Form eines Cellulosederivats, 1,5 % bis 0,5 % eines Netzmittels in Form eines nichtionischen-Polyglykoläther, und weiterhin 2,5 % bis 0,7 % eines oder mehrerer konservierungs- und/oder Rostschutzmittel enthält.

2. Paste nach Anspruch 1, dadurch gekennzeichnet, daß sie als Konservierungs- und Rostschutzmittel ein Benzoat, insbesondere Natriumbenzoat enthält.

3. Paste nach Anspruch 1 oder 2, dadurch gekennzeichnet, daß sie 1,5 % bis 0,5 % Natriumbenzoat enthält.

4. Paste nach Anspruch 1, 2 oder 3, dadurch gekennzeichnet, daß sie als weiteres Rostschutzmittel Natriumcarbonat enthält.

5. Paste nach den Ansprüchen 1, 2 oder 3, dadurch gekennzeichnet, daß sie als weiteres Rostschutzmittel Borax oder Trinatriumphosphat oder eine Alkaliseife enthält.

### Claims

1. Paste, more especially mounting paste for vehicle tyres, which largely contains water at the time of processing, characterised in that it contains 93 % to 98.3 % water, 3.0 % to 0.5 % of a water-soluble thickener in the form of a cellulose derivative, 1.5 % to 0.5 % of a wetting agent in the form of a nonionic surfactant, more especially of fat alcohol polyglycol ether, and also 2.5 % to 0.7 % of one or more preservatives and/or anticorrosive agents.

2. Paste according to claim 1, characterised in that it contains a benzoate, more especially sodium benzoate, as the preservative and anti-corrosive agent.

3. Paste according to claim 1 or 2, characterised in that it contains 1.5 % to 0.5 % sodium benzoate.

4. Paste according to claim 1, 2 or 3, characterised in that it contains sodium carbonate as an additional anti-corrosive agent.

5. Paste according to claim 1, 2 or 3, characterised in that it contains borax or a trisodium phosphate or an alkaline soap as an additional anti-corrosive agent.

### Revendications

1. Pâte, en particulier pâte de montage pour pneus de véhicules, contenant au moment du traitement surtout de l'eau, caractérisée en ce qu'elle contient de 93 % à 98,3 % d'eau, de 3,0 % à 0,5 % d'un corps soluble dans l'eau donnant de la consistance sous la forme d'un dérivé de cellulose, de 1,5 % à 0,5 % d'un agent mouillant sous la forme d'un agent tensioactif non ionique, en particulier de polyglycoléther d'alcool gras, et en outre de 2,5 % à 0,7 % d'un ou plusieurs agents de conservation et/ou agents antirouille.

2. Pâte selon la revendication 1, charactérisée en ce qu'elle contient comme agent de conservation et agent anti-rouille un benzoate, en particulier le benzoate de sodium.

3. Pâte selon la revendication 1 ou 2, caractérisée en ce qu'elle contient de 1,5 % à 0,5 % de benzoate de sodium.

4. Pâte selon les revendications 1, 2 ou 3, caractérisée en ce qu'elle contient comme autre agent anti-rouille du carbonate de sodium.

5. Pâte selon les revendications 1, 2 ou 3, caractérisée en ce qu'elle contient comme autre agent anti-rouille du borax, du phosphate trisodique ou un savon alcalin.

3